# EUROPEAN PATENT SPECIFICATION

(11) **EP 0 564 189 B1**
(45) Date of publication and mention of the grant of the patent: **11.11.1998**
(21) Application number: 93302368.1
(22) Date of filing: 26.03.1993
(51) Int. Cl.: B29C 65/06, B29C 65/20, B65B 13/32, B29L 29/00

(54) **A method for welding a packing band of thermoplastic resin, and a welded band**
Verfahren zum Verschweissen von Packbändern aus thermoplastischem Harz und das verschweisste Band
Procédé pour souder une bande d'emballage en résine thermoplastique et bande soudée par ce procédé

(30) Priority: 03.04.1992 JP 112070/92
(43) Date of publication of application: 06.10.1993
(73) Proprietor: SEKISUI JUSHI KABUSHIKI KAISHA, Osaka-shi (JP)
(72) Inventor: Fujii, Noboru, Osaka-shi (JP); Kawabata, Kenji, Mattou-shi, Ishikawa-ken (JP); Hashi, Masaaki, Nomi-gun, Ishikawa-ken (JP); Niikura, Junji, Ishikawa-gun, Ishikawa-ken (JP); Ouya, Tomotoshi, Ishikawa-gun, Ishikawa-ken (JP)
(74) Representative: Senior, Alan Murray

(56) References cited:
- EP-A- 0 022 615
- EP-A- 0 072 131
- FR-A- 2 571 304
- US-A- 3 674 972
- US-A- 4 483 438

## Description

This invention relates to a method for welding a band of a thermoplastic resin, the apparatus for doing so and also to a thus welded band of the thermoplastic resin. More particularly, the invention relates to a method for connecting the ends of a flat band of thermoplastic resin, particularly of polyolefin or polyethylene terephthalate, in which method the band is wound around an article to be packed and both ends of the band are made molten and firmly connected to each other, and also to a structure of the thus connected band.

Bands of thermoplastic resin are used for packing various articles. A band of this kind has a flat cross section, and has a high tensile strength. Thus the band of thermoplastic resin has been used for packing corrugated cardboard for a long time, and recently has been also used for packing articles of heavy weight.

When a band of thermoplastic resin is used for packing, the band is at first wound around an article to be packed, then tightened not to leave any loose part, and in this state both ends of the band are connected to each other. Both ends must be firmly connected so that the band may be neither slipped nor separated. Especially, when the band is used for packing the article of heavy weight, great importance is attached to the firm connection of the band, because when the articles of heavy weight are stacked one on the other, the band packing the lower article is sometimes broken on account of the heavy weight, resulting in collapse of the articles.

Hitherto clasps have been used for connecting the band. However, when it is considered that the thermoplastic resin can be firmly connected by heating to weld each other, it is clearly suited to connect the band by heating and welding. Thus, when the band of thermoplastic resin(it is hereinafter referred to as "band")is to be connected at the both ends thereof, a method for welding the band has widely been employed. The method for welding the band is classified depending on particular process of how to melt the thermoplastic resin constituting the band. Processes for melting the resin includes a process using a heating plate, a process using frictional heat, and a process using ultrasonic waves.

When the article of heavy weight is to be packed with the band, no matter what method is used for welding the band, it is difficult to elevate the strength of the welded part of the band up to more than 60% of the strength of the band itself. More particularly, when use is made of the band having a tensile strength of more than 300Kg/cm², which is welded for packing, the resulting welded part has nothing but a tensile strength within the range 30-60% of that of the band itself. Accordingly, it resulted in that the band is not suited for packing the article of heavy weight, though the band itself has a great tensile strength.

When the band is to be connected by welding, the welding has mostly hitherto been conducted in such a manner that the welded portion may be extended to form a single continuous area on the band. When it is desired to elevate the strength of the welded part, it has been commonly practised to extend an area of the welded part of the band. In this case, when viewed from the width direction of the band, it has also been practised to weld the band over the entire width wholly from one side to the other. Thus, in order to increase the strength of welded part of the band, the welded part has only been extended in the lengthwise direction of the band so that the welded part may form a single continuous area.

Other approaches, however, are known. For instance, document US-A-4,483,438 describes a welded band in which a number of welds which are elongate in the lengthwise direction of the band are provided across the width of the band. Document US-A-3,674,972 describes apparatus according to preamble of claim 1, which uses a pair of electrodes in the lengthwise direction of the band to spot-weld a metal band at two points.

It is therefore intended to obtain a connected part of the band having a great strength by welding the band.

For this purpose, the inventors at first tried to expand the area of the welded part in accordance with the conventional way. The inventors, however, found that it was difficult to elevate the strength of the welded part more than 65% of the strength of the band itself, even if the welded part was extended greatly in the lengthwise direction of the band. Particularly, the inventors found that the strength of the welded part could be at first increased as the welded part was expanded in the lengthwise direction of the band, however, an increasing rate in the strength of the welded part was gradually decreased, and at last the strength of the welded part could not be elevated after a length of the welded part had reached a certain value. For example, in case of the band commonly used for packing the article of heavy weight, there was no increase in the strength of the welded part after the length of the welded part had reached 2-3 times width of the band. Thus it has now been found that the strength of the welded part cannot be greatly elevated by extending the area of the welded part.

The inventors welded the bands in various ways and measured tensile strength of the welded parts of the bands. At that time the inventors examined particularly surfaces formed by breakage occurred when the tensile strength was measured. As the result, the inventors have found that the breakage does not occur at the original surface of the band but occurs primarily at the border between the molten part and unmolten part. This would be caused by the fact that the portion molten at the time of welding has a molecular structure different from that in the band itself and the breakage occurred in the boundary between the molten portion and unmolten portion, because the resin molecules are highly oriented in the band itself owing to high stretch given when the band was produced, while the resin molecules in the molten portion are not oriented owing to destruction of the molecular orientation caused by melting. Thus it was found that attempts are in vain to improve the weld strength by welding the contacting surfaces of the band, especially by increasing the welded area in the lengthwise direction of the band.

Furthermore, the inventors studied minutely the band surfaces formed by breakage when the welded band was pulled and broken. As the results, the inventors have found that both ends of the welded portion in the lengthwise direction of the band contribute greatly to the strength of the welded portion. In other words, the inventors have found that the intermediate in the welded portion does not contribute so much to the weld strength of the band, and the reason was understood that the increase of the area in the welded portion did not bring out an increase in the weld strength of the band as mentioned above.

Thus, the inventors prepared two kinds of the band connections having the same total welded area, one having two or more separate welded portions in the lengthwise direction of the band, the other having a single welded portion, and these bands were tested for measuring the weld strength. As the results, the inventors confirmed that the band connections having plural welded portions have higher weld strength than those having a single welded portion. The present invention has been completed on the basis of the above findings.

According to one aspect of the present invention there is provided a method of welding together sections of packing band, said method comprising the steps of:
overlapping a first and second section of band to be welded together;
melting a plurality of opposing separate portions on both overlapped sections by heat, the molten portions on both sections being separated in the lengthwise direction of the band by non-molten portions; and
pressing opposing molten portions together to weld them together with a non-welded zone separating adjacent welds in the lengthwise direction of the band; characterised
in that the packing band is of thermoplastic resin;
in that the welds are provided across the width of said band; and
in that the length of the or each non-welded zone is greater than or equal to the thickness of the band and less than or equal to twice the width of the band.

The method of the invention is directed to two particular embodiments, one of which is a method in which two parts of the band are melted by means of a heating plate, and the other is a method in which two parts of the band are rubbed each other to generate frictional heat in order to weld the band.

The former comprises a method wherein said heating step comprises the steps of interposing a heating plate between the contacting surfaces of the overlapping sections to melt portions of them, then removing the heating plate, said heating plate being provided with a plurality of heating portions to form said plurality of molten portions on both of the contacting surfaces.

The latter method comprises a method wherein said heating and pressing steps comprise the steps of pressing a vibrating plate against one of the overlapping sections to bring the contacting surfaces into close contact and to generate frictional heat between the contacting surfaces to melt portions of them, then stopping the vibration to weld the surfaces, said vibrating plate being provided with a plurality of vibrating portions to form said plurality of molten portions on both of the contacting surfaces.

According to a further aspect of the present invention there is provided a band including overlapping sections of the band welded together by a plurality of welds adjacent welds being separated, in the lengthwise direction of the band, by a non-welded zone; characterised
in that the packing band is of a thermoplastic resin;
in that said welds are provided across the width of said band; and in that
the length of the or each non-welded zone is greater than or equal to the thickness of the band and less than or equal to twice the width of the band.

According to yet another aspect of the invention there is provided apparatus for welding together sections of band, said apparatus comprising:
overlapping means for overlapping a first and second section of band to be welded together;
heating means for causing a plurality of opposing separate portions on both overlapped sections to melt and form molten portions separated by non-molten portions in the lengthwise direction of the band; and
pressing means for pressing opposing overlapping molten portions together to weld them together, adjacent welds being separated in the lengthwise direction of the band by a non-welded zone; characterised in that the apparatus is arranged:
to weld together sections of band of thermoplastic resin;
to provide said welded portions across the width of said band; and
to provide the or each non-welded zone with a length greater than or equal to the thickness of the band and less than or equal to twice the width of the band.

The band used in the invention may be made of a thermoplastic resin and is an elongate article having a flat cross section. As the thermoplastic resin material various resins can be used such as polyolefin, polyester and polyamide. As the polyolefin use can be made of polyethylene and polypropylene, as the polyester use can be made of polyethylene terephthalate, and as the polyamide use can be made of 6-nylon and 6,6-nylon. Among them, the band of polypropylene is most widely used. By the flat cross section is meant a cross section having a width greater than 15 times, preferably 20 times, the thickness of the band. The width is generally within the range of 5-35mm. The wide surfaces are sometimes smooth but often embossed to have many little protuberances and recesses distributed alternately on the entire surfaces in order to prevent the band from slipping.

The band is prepared by extruding the thermoplastic resin into an extrudate having a flat cross section, then stretching the extrudate more than five times in the extruding direction to have the resin molecules oriented in the lengthwise direction, and thereby to give a high strength in the lengthwise direction. Thus the band has a high tensile strength. For this reason the band has sometimes the disadvantages that the band is liable to be split in the lengthwise direction.

In order to connect a part of the band with the other, both the part and the other must be simultaneously heated so as to melt only surface portions of the band. The reason for this is that, when the band is heated and molten, the molecules in the molten portion lose their orientation as mentioned above, and the molten portion effects low tensile strength. The heating of the band, therefore, is preferably carried out either by heat conduction from the band surface using a heating plate or by frictional heat generated by rubbing the band surfaces together.

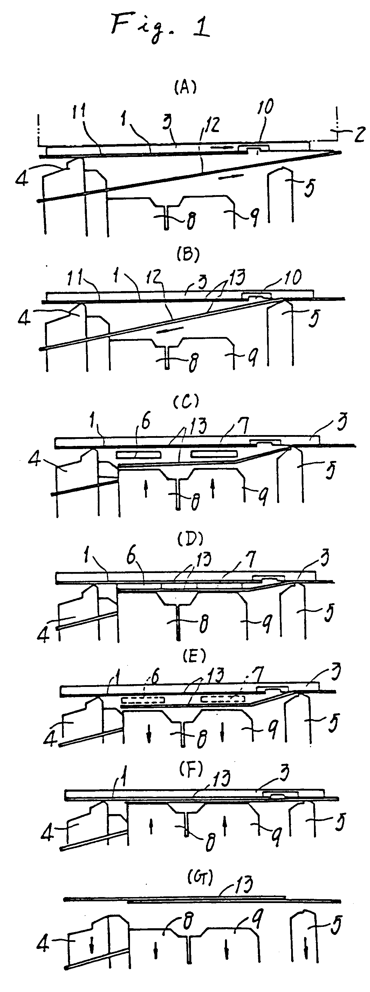

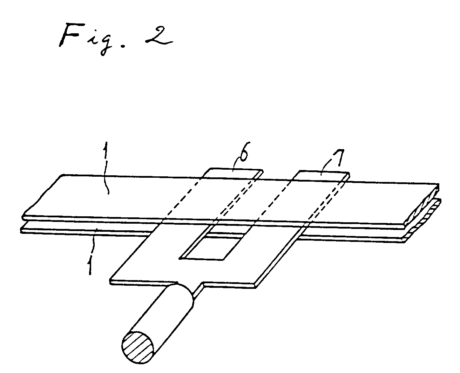

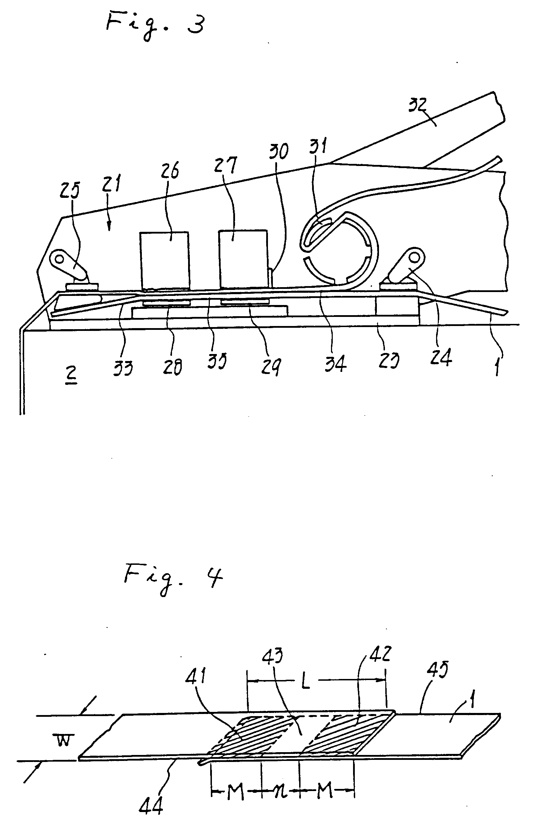

The invention is further described, merely by way of non limitative example in the following description, with reference to the accompanying drawings, in which : Fig.1 shows a schematic view of a method in which a band is welded by means of a heating plate, Fig.2 is an oblique view of an example of the heating plate as shown in Fig. 1, Fig. 3 is a schematic view of a method in which a band is welded by means of two vibrating plates, and Fig.4 is an oblique view of a welded band according to the present invention.

In Fig.1, a numeral reference 1 denotes a packing band of polypropylene, and 2 an article to be packed. Numeral references 3-10 denote members in a welding apparatus. Among the members, a numeral reference 3 denotes a sliding table, 4 a first holding means, 5 a second holding means, 6 and 7 a heating plate, 8 and 9 a pressing member, and 10 a limit switch. The heating plates 6 and 7 are separately made and located at a certain distance. The pressing members 8 and 9 are also separately made and located at the positions opposite to the heating plates 6 and 7, respectively. Other matters than the said explanation are the same as in the conventional welding apparatus and acts in the same manner

Fig.1 shows a method in which the band is connected as follows: The article 2 to be packed is placed on a stand not shown in Fig.1. Band 1 is wound around the article 2, tightened by pulling both ends nearer, and the both ends are overlapped under the article 2. More particularly, as shown in Fig.1(A), at first, when the forward end of the band 1 is contacted with the limit switch 10, the first holding means 4 is elevated to press the forward part 11 to the sliding table 3 and the forward part 11 is secured by the first holding means 4. Then the second holding means 5 is elevated, as shown in Fig.1(B), and the pulling part 12 of the band is secured by the second holding means 5 and sliding table 3. At this time, both the forward part and the pulling part of the band are overlapped to contact a wide surface of the pulling part with a wide surface of the forward part and to form a double part 13.

Thereafter heating plates 6 and 7 are interposed into the double part 13 as shown in Fig.1(C), and then pressing means 8 and 9 are elevated to cut the pulling part of the band. Subsequently, as shown in Fig.1(D), pressing means 8 and 9 are further elevated to press the double part 13 to sliding table 3 and then to melt the mutually facing surfaces in the double part by heat conduction from heating plates 6 and 7. At this time, heating plate 6 is separated from heating plate 7 and an unheated part is formed between heating plate 6 and 7. Thus, plural molten portions separated in the lengthwise direction of the band are formed on the mutually facing surfaces in the double parts, and a non-molten portion is remained between the molten portions. In this instance, both heating plates 6, 7 and pressing means 8, 9 are separated each other.

When a surface portion of each of the mutually facing surface is molten by heating plates 6 and 7, pressing means 8 and 9 are lowered as shown in Fig.1(E), and then heating plates 6 and 7 are removed from the double parts of the band. Subsequently, as shown in Fig.1(F), pressing means 8 and 9 are elevated again to press the double parts to sliding table 3. Then the molten portions are welded but the non-molten portion is not welded and is remained simply in close contact with each other. Thereafter, as shown in Fig.1(G), pressing means 8 and 9 are lowered, first holding means 4 and second holding means 5 are also lowered, further sliding table 3 is withdrawn, and thereby the packing is completed.

In Fig.1, heating plate 6 is made separately from heating plate 7, but both heating plates 6 and 7 may be made in one body, as shown in Fig.2, in such a type that they are united in the bottom but separated in the head thereof. Pressing means 8 and 9 are made separately each other in Fig.1, however, they may be made in one body. In this case, the pressing means should have a recessed portion at the non-welded portion.

Fig.3 shows a method for welding the band by using frictional heat, and parts therein are as follows: A numeral reference 1 denotes a packing band of polypropylene, 2 denotes an article to be packed. A numeral reference 21 denotes a manual welding apparatus, which is mounted on the article 2. Numeral references 23-32 denote parts of the welding apparatus 21. Among them, a numeral reference 23 denotes a chassis of the apparatus, 24 the first holding means, 25 the second holding means, 26 and 27 sealing heads, 28 and 29 vibrating plates, 30 a cutter, 31 a tightening reel, and 32 a handle. The sealing head 26 is made separately from the sealing head 27, and both sealing heads are arranged at a distance in the lengthwise direction of the band. Vibrating plates 28 and 29 are also arranged at the said distance in the lengthwise direction of the band corresponding respectively to the sealing heads 26 and 27. In other respects, the welding apparatus has the parts as those in the welding apparatus stated above, and acts in the same manner as stated above.

Particulars of the welding process shown in Fig.3 are as follows: At first, welding apparatus 21 is mounted on an article 2 to be packed, band 1 is wound around the article 2, then band 1 is tightened, and both ends of the band 1 are overlapped above the article 2. At this time, forward part 33 of the band 1 is passed between vibrating plates 28, 29 and sealing heads 26, 27, and then passed under the first holding means 24. On the other hand, a tightening part 34 of the band 1 is passed under the second holding means 25, placed above the forward part 33 of the band 1, and passed between the sealing heads 26, 27 and vibrating plates 28, 29, and then fixed to a tightening reel 31. Thus an overlapping part 35 of the band 1 is formed between the forward part 33 and the tightening part 34 of the band 1.

In this state, the first holding means 24 is rotated and the forward part 33 is secured between the first holding means 24 and the chassis 23. Handle 32 is operated to rotate the tightening reel 31, thereby pulling the tightening part 34 to further tighten the band 1, in this state the second holding means 25 is further rotated, and the tightening part 34 is secured between the second holding means 25 and the chassis 23. Subsequently, the sealing heads 26 and 27 are lowered, and the overlapping part 35 of the band 1 is pinched between the sealing heads 26, 27 and the vibrating plates 28, 29.

While the band 1 is being pressed by the sealing heads 26 and 27, the vibrating plates 28 and 29 are vibrated along the overlapped surfaces. Vibration along the overlapped surfaces means that the band 1 is vibrated either in the lengthwise direction or widthwise direction of the band itself. The vibration is carried out, for example, by reciprocating the band within the range in which the sealing head is existent at a rate of 10,000-30,000 rpm. When such vibration is carried out for 1-10 seconds, the opposing surfaces in the overlapped parts are molten by frictional heat at the portions wherein the vibrating plates 28 and 29 are opposed to the sealing heads 26 and 27. When vibration of the vibrating plates 28 and 29 is stopped and the opposing parts of the band are cooled while being pressed, the opposing parts are welded each other at the molten portions. Thus, packing has been completed.

The vibrating plates 28 may be made separately from the vibrating plate 29, but both plates may be made in one bloc. When the both plates are made in one bloc, a groove must be formed on the bloc so that the opposing parts are partly prevented from contacting each other to form an unmolten portion at the groove. The vibrating plates are preferably vibrated in the width direction of the band, and it is sufficient to move the vibrating plates at a distance of about 1mm.

The connecting portion of the band obtained by the welding method shown in Figs.1 and 3 has a structure as shown in Fig.4. In Fig. 4, welded portions are indicated by hatching. The welded portions 41 and 42 are separated in the lengthwise direction of the band, and an unwelded portion 43 exists between the welded portions 41 and 42. The welded portions 41 and 41 extend through the entire width of the band, and the unwelded portion 43 also extends through the entire width of the band 1.

The length n of the unwelded portion 43 in the lengthwise direction of the band 1 is more than the thickness of the band 1, and less than twice the width W of the band 1, preferably less than the width W. Existence of the unwelded portion 43 has never seen in the conventional connecting parts of the band.

The unwelded portion 43 can be clearly seen from the outside of the band. It is because the band, as the result of having been welded, has an increased width owing to protrusion of the molten resin on both sides 44 and 45 of the band, and has a slightly decreased thickness at the welded portion 41 and 43, however, at the unwelded portion 43 the band maintains the original width and no such protrusion can be seen on both sides 44 and 45.

Fig.4 shows the band having two welded portions, however, the welded portions is not limited to two, but may be three or more. In case of two welded portions, they show a considerable improvement in weld strength compared with a case of a single welded portion, however, in case of three or more welded portions, they do not show a considerable improvement in weld strength compared with the case of two welded portions. Moreover, it not necessary that the welded portions have the same area, and they may have different areas. Also it is not necessary that the welded portions have a rectangular shape, and they may be of a parallelogram.

Referring to the band shown in Fig.4, it is preferable that the band has the following numeral ranges: 40≧ M ≧ 5mm, 40≧ n ≧ 1mm and 11≦ L ≦ 200mm. The reasons for this are that, it is not easy to form M exceeding 40mm and conversely if M is less than 5mm, then the welded area is decreased and the welded strength tend to be short, if n exceeds 40mm, the double part is liable to slacken and does not contact closely, and conversely if n is less than 1mm, then the neighboring welded portions are too close each other, and it becomes difficult to provide the unwelded portion between them, and if L is less than 11mm, then the weld strength becomes insufficient, and conversely if L is more than 200mm, then it cannot be expected that an increase to more than 200mm brings about an improvement of the weld strength corresponding to the increase of L, and further it becomes difficult to operate the heating of the band.

According to the present invention, the band connection as shown in Fig.4 can be obtained by one treatment, wherein plural welded portions are formed separated by an unwelded portion in the lengthwise direction of the band. The band connection shown in Fig.4 has the advantage that it has a greater weld strength compared with the conventional connection having a single welded portion because of the plural welded portions separated by the unwelded portion. The band, therefore, can be firmly secured and accordingly can be safely used for packing the articles of heavy weight, resulting in widening a utilization range of the band. In this respect the present invention brings about great advantages.

It is quite unexpected that the weld strength is elevated in the case wherein the unwelded portion 43 is formed, as shown in Fig.4, compared with the case wherein the unwelded portion 43 is not formed. Thus, the fact is hereinbelow explained by giving examples, wherein weld strength given below is an average value of the results obtained with ten test samples.

### Example 1

A band of stretched polypropylene was used having a flat section, a width of 19 mm, a thickness of 1 mm, wide surfaces with regular ruggedness, and strength of 931 kg. A welding apparatus was used having a structure as shown in Fig.1. Particularly, the welding apparatus had a heating plate which extended over the entire width of the band in the width direction and which had two heating portions, each having the length of 20 mm, and a non-heating portion having the length of 10 mm between the said heating portions in the lengthwise direction of the band. The heating portions were heated at 280 °C, contacted with the band for 0.8 second, and thus heated only surface portions of the band. Thus, the band was welded, and this relation was explained with reference to Fig.4 that there were formed two molten portions having the length M of 20 mm in the lengthwise direction of the band and an unmolten portion having the length n of 10 mm between said two molten portions.

After the molten portions had been formed, the heating plate was removed, and the molten portions were pressed together and cooled. At this time, the total pressure was maintained at 167 kg and pressing time was made for two seconds. After having been pressed and cooled, the molten portions were welded each other and there were formed two welded portions having the length of 20 mm. Thus, there was formed the total welded area of 7.6 cm². Pressing strength of 22 kg/cm² was applied to the band while being cooled.

Thus welded portions in the band were extended to 50 mm in the lengthwise direction of the band. When the weld strength of the band was measured, it was 624 kg. This weld strength was excellent, compared with the conventional weld strength of approximately 500 kg in the band generally having the weld area of approximately 7.6 cm².

### Example 2

This Example was carried out in the same manner as in Example 1, excepting that the heating plate and the pressing means were changed. The heating plate used in this Example had three heating portions, each of which had the length of 13.3 mm, and had two non-heating portions of 5 mm in length between the contiguous heating portions. The pressing means had three pressing portions, each of which was corresponding to each of the heating portions. Thus, there were formed on the band three molten portions having the length M of 13.3 mm, and two unmolten portions having the length n of 5 mm between the neighboring molten portions. In other respects the band was treated in the same manner as in Example 1 and a welded band was obtained. As the result, the welded band had three welded port ions separated by non-welded portions, these portions being spread within a range of 50 mm in the lengthwise direction. The welded band may be expressed to have a weld pattern of 13.3+(5)+13.3+(5)+13.3.

The welded band had the weld strength of 618 kg and was excellent.

### Comparative Example 1

This Comparative Example was carried out in the same manner as in Example 1, excepting that the heating plate and the pressing means were changed. The heating plate used herein had a single heating portion of 50 mm in length extending in the lengthwise direction of the band. The pressing means had a single pressing portion corresponding to the single heating portion. In order to equalize the pressing strength to that in Example 1, a pressure of 209 kg was totally given to the pressing means. In other respects the band was treated in the same manner as in Example 1. As the result, the band was obtained which had a single welded portion of 50 mm in length in the lengthwise direction of the band. That is, there was not a non-welded portion in the welded portion.

The weld strength of the band was measured, and it was found that the weld strength was 481 kg.

### Comparative Example 2

This Comparative Example was carried out in the same manners as in Example 1, excepting that the heating plate and the pressing means were changed. The heating plate used in this Comparative Example had a single heating portion of 40 mm in length in the lengthwise direction of the band. The pressing means had a single pressing portion corresponding to the single heating portion. As the result, the band was obtained which had a single welded portion of 40 mm in length in the lengthwise direction of the band.

The weld strength of the band was measured, and it was found that the weld strength was 460 kg.

Above results are listed in Table 1 hereinbelow.

**Table 1**

| | WELD PATTERN Figures in parentheses show length of non-welded portion | WELDED PORTION | | PRESSURE | | WELD STRENGTH |
|---|---|---|---|---|---|---|
| | | TOTAL LENGTH | WELDED AREA | TOTAL PRESSURE | PRESSING STRENGTH | |
| | mm | mm | cm² | kg | kg/cm² | kg |
| EXAMPLE 1 | 20+(10)+20 | 50 | 7.6 | 167 | 22 | 624 |
| EXAMPLE 2 | 13.3+(5)+ 13.3+(5)+ 13.3 | 50 | 7.6 | 167 | 22 | 618 |
| COMPARATIVE EXAMPLE 1 | 50 | 50 | 9.5 | 209 | 22 | 481 |
| COMPARATIVE EXAMPLE 2 | 40 | 40 | 7.6 | 167 | 22 | 460 |

When data in Table 1 are compared, it becomes clear that the bands with plural welded portions obtained in the above Examples have a superior weld strength to the bands with a single welded portion obtained in the above Comparative Examples.

### Example 3

Example 3 and the subsequent Examples were carried out by welding with frictional heat. A band was used which was made of stretched polypropylene, had a width of 32 mm, a thickness of 0.9 mm, surfaces with a large number of small protuberances and recesses, and a strength of 1252 kg in itself.

In Example 3, the apparatus as shown in Fig.3 was used for generating the frictional heat. Two vibrating plates 28 and 29, each of which had a length of 16 mm in the lengthwise direction of the band, were located at a distance of 8 mm. The vibrating plates made 17300 reciprocations per minute with an amplitude of 1 mm for 1.5 seconds to generate the frictional heat between the opposing surfaces of the band. Thus two molten portions, each of which had the area of 16 mm X 32 mm (total area 10.2 cm²), were formed at a distance of an unmolten portion having the area of 8 mm X 32mm.

Immediately after the vibration had been stopped, the band was cooled and thus welded. In this instance, sealing heads 26 and 27 were made separately corresponding to independent vibrating plates 28 and 29,respectively, and each of the sealing heads were pressed with the pressure of 45 kg, accordingly totally 90 kg. Thus the pressing strength was 8.8 kg/cm².

Thus welded band was tested for measuring the weld strength, and it had the weld strength of 879 kg.

### Example 4

This Example was carried out in the same manner as in Example 3, excepting that the vibrating plates, and sealing heads were changed and total pressure of the sealing heads was also changed so as to equalize the pressing strength to that in Example 3. Three vibrating plates and three sealing heads were used so as to form three molten portions of 10 mm in length in the lengthwise direction of the band at intervals of 5 mm, and hence the total area of the molten portions were 9.6 cm². The sealing heads were pressed by the total pressure of 84.5 kg, and accordingly by the pressing strength of 8.8 kg/cm², which was equal to the pressing strength in Example 3.

The resulting band had the weld strength of 868 kg.

### Example 5

This Example was carried out in the same manner as in Example 3, excepting that the vibrating plates and sealing heads were changed, and total pressure of the sealing heads was also changed so that the pressing strength by the sealing heads was equalized to that in Example 3. In this Example, two vibrating plates were used, each of which had a length of 15 mm in the lengthwise direction of the band, and which were located at a distance of 2 mm in the lengthwise direction of the band. The total pressure by the sealing heads was 84.5 kg, and hence the pressing strength was 8.8 kg/cm², which was equal to that in Example 3.

As the result, the band had two welded portions of 15 mm in length in the lengthwise direction of the band, and a non-welded portion of 2 mm in length between said two welded portions. The band had the weld strength of 853 kg.

### Comparative Example 3

This Comparative Example was carried out in the same manner as in Example 3, excepting that the vibrating plates and sealing head were changed. Particularly, one alone of two vibrating plates used in Example 3 was used in this Comparative Example, and the total pressure applied to the sealing head was reduced to half to be 45 kg, as the result the pressing strength was equalized to that in Example 3, and in other respects the Comparative Example was carried out in the same manner as in Example 3.

The resulting band had a single welded portion of 16 mm in length in the lengthwise direction of the band, and had the weld strength of 561 kg.

### Comparative Example 4

This Comparative Example was carried out in the same manner as in Example 3, excepting that the vibrating plates and the sealing heads were changed. Particularly, two vibrating plates used in Example 3 were connected into one bloc so as to eliminate a gap between the vibrating plates, and two sealing heads were also connected into one bloc so as to correspond to the vibrating plates. In other respects, the band was treated in the same manner as in Example 3.

The resulting band had only one welded portion of 32 mm in length in the lengthwise direction of the band, and had the weld strength of 722 kg.

### Comparative Example 5

This Comparative Example was carried out in the same manner as in Example 3, excepting that the vibrating plates and the sealing heads were changed. Particularly, use was made of only one vibrating plate having the length of 40 mm in the lengthwise direction of the band, and use was made of a single sealing head corresponding to the said vibrating plate. The total pressure applied to the sealing head was made 112.6 kg to give an equal pressing strength to that in Example 3, and the others were carried out in the same manner as in Example 3.

The resulting band had a single welded portion of 40 mm in length in the lengthwise direction of the band, and had the weld strength of 756 kg.

Above-mentioned matters stated after Example 3 are listed in the following Table 2;

**Table 2**

| | WELD PATTERN Figures in parentheses show length of non-welded portion | WELDED PORTION | | PRESSURE | | WELD STRENGTH |
|---|---|---|---|---|---|---|
| | | TOTAL LENGTH | WELDED AREA | TOTAL PRESSURE | PRESSING STRENGTH | |
| | mm | mm | cm² | kg | kg/cm² | kg |
| EXAMPLE 3 | 16+(8)+16 | 40 | 10.2 | 90 | 8.8 | 879 |
| EXAMPLE 4 | 10+(5)+10 +(5)+10 | 40 | 9.6 | 84.5 | 8.8 | 868 |
| EXAMPLE 5 | 15+(2)+15 | 32 | 9.6 | 84.5 | 8.8 | 853 |
| COMPARATIVE EXAMPLE 3 | 16 | 16 | 5.1 | 45 | 8.8 | 561 |
| COMPARATIVE EXAMPLE 4 | 32 | 32 | 10.2 | 90 | 8.8 | 722 |
| COMPARATIVE EXAMPLE 5 | 40 | 40 | 12.8 | 112.6 | 8.8 | 756 |

When data in Table 2 are compared, it becomes clear that the bands with plural welded portions obtained in the above Examples have a superior weld strength to the bands with a single welded portion obtained in the above Comparative Examples.

### Example 6

In this Example a band of stretched polypropylene was used having a width of 31mm, a thickness of 0.97mm and a strength of 1320 kg in itself, and two molten portions in the lengthwise direction of the band were formed on the surface of the band by rubbing together the surfaces to leave an unmolten portion of 8mm in length between the molten portions. The molten portions were pressed by sealing heads under varying pressures to form welded bands all having a weld pattern of 16+(8)+16. More particularly, the pressure were varied so as to give a pressing strength of 10, 15, 20, 25 30 or 34 kg/cm². Using thus welded bands the weld strength of the band was measured, and the results listed in Table 3 were obtained.

**Table 3**

| PRESSURE | | WELDED PROTIONS | | WELD STRENGTH kg |
|---|---|---|---|---|
| PRESSING STRENGTH kg/cm² | TOTAL PRESSURE kg | TOTAL LENGTH | WELDED AREA cm² mm | |
| 10 | 99.2 | 32 | 9.9 | 889 |
| 15 | 148.8 | 32 | 9.9 | 940 |
| 20 | 198.4 | 32 | 9.9 | 956 |
| 25 | 248.0 | 32 | 9.9 | 941 |
| 30 | 297.0 | 32 | 9.9 | 887 |
| 34 | 337.3 | 32 | 9.9 | 667 |

When data in Table 3 are reviewed, it is seen that, in case wherein the pressing strength is less than 20kg/cm², the weld strength is increased according as the pressing strength is increased, however, in case wherein the pressing strength is more than 20 kg/cm², the weld strength is not increased but rather slightly decreased according as the pressing strength is increased, and in case wherein pressing strength is more than 30 kg/cm², the weld strength is considerably decreased.
Accordingly, in case of the polypropylene band, it becomes clear that the pressing strength should be less than 30 kg/cm².

### Example 7

In this Example, a flat band of stretched polyethylene terephthalate was used having a width of 31mm, a thickness of 0.84mm, a regularly rugged pattern on its surfaces and a strength of 1054 kg in itself. The surfaces of the band were partly molten by contacting a heating plate in the same manner as in Example 1. The heating plate had two heating portions, each of which had a length of 20mm in the lengthwise direction of the band and between which was formed a non-heating portion having a length of 10mm. The heating plate was heated at 430 °C , contacted with the band for 0.3 second, and thus heated only a surface portion of the band.

Thus, on the band were formed two molten portions each having a length of 20mm in the lengthwise direction of band and a non-molten portion having a length of 10mm between the mol ten port ions. Subsequently the heating plate was removed from the band, and the molten portions were pressed and cooled. At this time the total pressure was maintained at 273 kg and pressing time was made for two seconds. After having been pressed, the molten portions were welded together and there were formed welded portions forming a weld patter of 20+(10)+20.

As to thus welded band, a weld strength of the band was measured, and found to be 920 kg.

### Example 8

This Example was carried out in the same manner as in Example 7, excepting that the heating plate and the pressing means were changed. The heating plate and the pressing means used herein were the same as those used in Example 2. Particularly, the heating plate had three heating portions, each having a length of 13.3mm in the lengthwise direction of the band, and had two non-heating portions having a length of 5mm between the neighboring heating portions. The pressing means was used having three pressing portions, each of which was corresponding to each of the said heating portions. In other respects, the band was treated in the same manner as in Example 7 and welded to form a weld pattern of 13.3+(5)+13.3+(5)+13.3.

The weld strength was measured of thus welded band, and found to be 915 kg.

### Comparative Example 6

This Comparative Example was carried out in the same manner as in Example 7, excepting that the heating plate and pressing means were changed. The heating plate and pressing means used herein were the same as those used in Comparative Example 1. Particularly, the heating plate had a single heating portion of 50mm in length in the lengthwise direction of the band, and the pressing means had also a single pressing portion corresponding to the single heating portion. In order to equalize the pressing strength to that in Example 7, a total pressure of 341 kg was given to the pressing means. As the results, the band was welded to have a weld pattern of 50, which did not include any non-welded portion in the welded portion.

The weld strength was measured of thus welded band, and found to be 789 kg.

### Comparative Example 7

This Comparative Example was carried out in the same manner as in Example 7, excepting that the heating plate and pressing means were changed. The heating plate and pressing means used herein were the same as those used in Comparative Example 2. Particularly, the heating plate had a single heating portion of 40mm in length in the lengthwise direction of the band, and the pressing means had also a single pressing portion corresponding to the single heating portion. In other respects, the band was treated in the same manner as in Example 7 to have a weld pattern of 40.

The weld strength was measure of thus welded band, and found to be 773 kg.

The results obtained in Examples 7, 8 and Comparative Examples 6, 7 are listed in Table 4.

**Table 4**

| | WELD PATTERN Figures in parentheses show length of non-welded portion | WELDED PORTION | | PRESSURE | | WELD STRENGTH |
|---|---|---|---|---|---|---|
| | | TOTAL LENGTH | WELDED AREA | TOTAL PRESSURE | PRESSING STRENGTH | |
| | mm | mm | cm² | kg | kg/cm² | kg |
| EXAMPLE 7 | 20+(10)+20 | 50 | 12.4 | 273 | 22 | 920 |
| EXAMPLE 8 | 13.3+(5)+ 13.3+(5)+ 13.3 | 50 | 12.4 | 273 | 22 | 915 |
| COMPARATIVE EXAMPLE 6 | 50 | 50 | 15.5 | 341 | 22 | 789 |
| COMPARATIVE EXAMPLE 7 | 40 | 50 | 12.4 | 273 | 22 | 773 |

When data in Table 4 are reviewed, it is seen that even in case wherein the bands are made of stretched polyethylene terephthalate, the bands with plural welded portions obtained in Examples 7 and 8 have also superior weld strengths to the bands with a single welded portion obtained in Comparative Examples 6 and 7.

## Claims

1. A method of welding together sections of packing band (1), said method comprising the steps of:
overlapping a first and second section of band (11,12;34,35;44,45) to be welded together;
melting a plurality of opposing separate portions (11,12;33,34) on both overlapped sections (13;35) by heat, the molten portions on both sections being separated in the lengthwise direction of the band by non-molten portions; and
pressing opposing molten portions together to weld them together with a non-welded zone (43) separating adjacent welds (41,42) in the lengthwise direction of the band (1); characterised
in that the packing band is of thermoplastic resin;
in that the welds (41,42) are provided across the width of said band; and
in that the length of the or each non-welded zone (43) is greater than or equal to the thickness of the band (1) and less than or equal to twice the width of the band (1).

2. A method according to claim 1 wherein said heating step comprises the steps of interposing a heating plate (6,7) between the opposed surfaces of the overlapping sections (13;35) to melt portions of them, then removing the heating plate (6,7), said heating plate being provided with a plurality of heating portions (6,7) to form said plurality of molten portions on both of the opposed surfaces.

3. A method according to claim 1 wherein said heating and pressing steps comprise the steps of pressing a vibrating plate (26,27) against one of the overlapping sections (13;35) to bring the opposed, contacting surfaces of the first and second sections into close contact and to generate frictional heat between the contacting surfaces to melt portions of them, then stopping the vibration to weld the surfaces, said vibrating plate being provided with a plurality of vibration portions (26,27) to form said plurality of molten portions on both of the contacting surfaces.

4. A welded packing band (1) including overlapping sections of the band (13;35) welded together by a plurality of welds (41,42) adjacent welds being separated, in the lengthwise direction of the band, by a non-welded zone (43); characterised
in that the packing band is of a thermoplastic resin;
in that said welds (41,42) are provided across the width of said band (1); and in that
the length of the or each non-welded zone (43) is greater than or equal to the thickness of the band (1) and less than or equal to twice the width of the band (1).

5. A method or band according to any one of the preceding claims wherein said band (1) is of stretched thermoplastic resin and has a flat cross section so that the opposed surfaces (13;35) are wide surfaces.

6. A method or band according to any one of the preceding claims wherein the length of the or each non-welded zone (43) is less than or equal to the width of the band (1).

7. Apparatus for welding together sections of band (1), said apparatus comprising:
overlapping means (4,5;24,25) for overlapping a first and second section of band (11,12;34,35;44,45) to be welded together;
heating means (6,7;26,27) for causing a plurality of opposing separate portions (11,12;33,34) on both overlapped sections to melt and form molten portions separated by non-molten portions in the lengthwise direction of the band (1); and
pressing means (8,9;26,27) for pressing opposing overlapping molten portions together to weld them together, adjacent welds (41,42) being separated in the lengthwise direction of the band (1) by a non-welded zone (43); characterised in that the apparatus is arranged:
to weld together sections of band of thermoplastic resin;
to provide said welded portions (41,42) across the width of said band (1); and
to provide the or each non-welded zone (43) with a length greater than or equal to the thickness of the band (1) and less than or equal to twice the width of the band (1).

8. Apparatus according to claim 7 wherein said heating means (6,7;26,27) comprises two or more heat causing members spaced apart to form said molten portions simultaneously.

9. A method according to any one of claims 1 to 3, 5 and 6, a band according to any one of claims 4 to 6 or apparatus according to any one of claims 7 to 8 wherein the welds are formed across the entire width of the band.

10. A package comprising one or more items encompassed by a band (1) according to claim 4, 5 or 6 or by a band (1) having a weld provided by the method of any one of claims 1 to 3, 5, 6 and 9 or by the apparatus of claim 7, 8 or 9.

## Patentansprüche

1. Verfahren zum Zusammenschweißen von Abschnitten eines Packbands (1), wobei das Verfahren folgende Schritte umfaßt:
- Überlappen eines ersten und zweiten zusammenzuschweißenden Abschnitts des Bands (11, 12; 34, 35; 44, 45);
- Schmelzen mehrerer gegenüberliegender getrennter Teile (11, 12; 33, 34) auf beiden überlappten Abschnitten (13; 35) mittels Wärme, wobei die geschmolzenen Teile auf beiden Abschnitten in der Längsrichtung des Bands durch nicht geschmolzene Teile getrennt sind, und
- Zusammenpressen der gegenüberliegenden geschmolzenen Teile, um diese zusammenzuschweißen, wobei benachbarte Verschweißungen (41, 42) in der Längsrichtung des Bands (1) durch einen nicht verschweißten Bereich (43) getrennt werden;
dadurch gekennzeichnet, daß
- das Packband aus thermoplastischem Harz ist;
- die Verschweißungen (41, 42) über die Breite des Bands vorgesehen sind und
- die Länge des bzw. jedes nicht verschweißten Bereichs (43) größer oder gleich der Dicke des Bands (1) und kleiner oder gleich der doppelten Breite des Bands (1) ist.

2. Verfahren nach Anspruch 1, dadurch gekennzeichnet, daß der Erhitzungsschritt die Schritte des Einsetzens einer Heizplatte (6, 7) zwischen den gegenüberliegenden Flächen der sich überlappenden Abschnitte (13; 35) zwecks Schmelzens von Teilen davon, dann das Entfernen der Heizplatte (6, 7) umfaßt, wobei die Heizplatte mit mehreren Heizteilen (6, 7) versehen ist, um mehrere geschmolzene Teile aufbeiden gegenüberliegenden Flächen zu bilden.

3. Verfahren nach Anspruch 1, dadurch gekennzeichnet, daß die Heiz- und Preßschritte folgende Schritte umfassen: Fressen einer Vibrationsplatte (26, 27) gegen einen der überlappenden Abschnitte (13; 35), um die gegenüberliegenden sich berührenden Flächen der ersten und zweiten Abschnitte in engen Kontakt zu bringen und um Reibungswärme zwischen den sich berührenden Flächen zu erzeugen, so daß Teile davon geschmolzen werden, dann Anhalten der Vibration, um die Flächen zu verschweißen, wobei die Vibrationsplatte zur Bildung mehrerer geschmolzener Teile auf beiden berührenden Flächen mit mehreren Vibrationsteilen (26, 27) versehen ist.

4. Verschweißtes Packband (1) einschließlich überlappender Abschnitte des Bands (13; 35), die durch mehrere Verschweißungen (41, 42) zusammengeschweißt sind, wobei benachbarte Verschweißungen in der Längsrichtung des Bands durch einen nicht verschweißten Bereich (43) getrennt sind, dadurch gekennzeichnet, daß
- das Packband aus einem thermoplastischem Harz ist;
- die Verschweißungen (41, 42) über die Breite des Bands vorgesehen sind und
- die Länge des bzw. jedes nicht verschweißten Bereichs (43) größer oder gleich der Dicke des Bands (1) und kleiner oder gleich der doppelten Breite des Bands (1) ist.

5. Verfahren oder Band nach einem der vorstehenden Ansprüche, dadurch gekennzeichnet, daß das Band (1) aus gedehntem thermoplastischem Harz ist und einen flachen Querschnitt aufweist, so daß die gegenüberliegenden Flächen (13; 35) breite Flächen sind.

6. Verfahren oder Band nach einem der vorstehenden Ansprüche, dadurch gekennzeichnet, daß die Länge des bzw. jedes nicht verschweißten Bereichs (43) kleiner oder gleich der Breite des Bands (1) ist.

7. Vorrichtung zum Zusammenschweißen von Abschnitten des Bands (1), wobei die Vorrichtung folgendes umfaßt:
- Überlappungsmittel (4, 5; 24, 25) zum Überlappen eines ersten und zweiten Abschnitts des zusammenzuschweißenden Bands (11, 12; 34, 35; 44, 45);
- Erhitzungsmittel (6, 7; 26, 27), um zu bewirken, daß mehrere gegenüberliegende getrennte Teile (11,12; 33, 34) auf den beiden überlappten Abschnitten schmelzen und von nicht geschmolzenen Teilen getrennte, geschmolzene Teile in der Längsrichtung des Bands (1) ausbilden, und
- Preßmittel (8, 9; 26, 27) zum Zusammenpressen gegenüberliegender, überlappender geschmolzener Teile, um diese zusammenzuschweißen, wobei benachbarte Verschweißungen (41, 42) in der Längsrichtung des Bands (1) durch einen nicht verschweißten Bereich (43) getrennt werden,
dadurch gekennzeichnet, daß die Vorrichtung so angeordnet ist, daß:
- Abschnitte des Bands aus thermoplastischem Herz zusammengeschweißt werden;
- verschweißte Teile (41, 42) über die Breite des Bands (1) vorgesehen werden und
- der bzw. jeder nicht verschweißte Bereich (43) eine Länge erhält, die größer oder gleich der Dicke des Bands (1) und kleiner oder gleich der doppelten Breite des Bands (1) ist.

8. Vorrichtung nach Anspruch 7, dadurch gekennzeichnet, daß das Erhitzungsmittel (6, 7; 26, 27) zwei oder mehrere Hitze verursachende Elemente umfaßt, die zur gleichzeitigen Bildung geschmolzener Teile beabstandet sind.

9. Verfahren nach einem der Ansprüche 1 bis 3, 5 und 6, Band nach einem der Ansprüche 4 bis 6 oder Vorrichtung nach einem der Ansprüche 7 bis 8, dadurch gekennzeichnet, daß die Verschweißungen über die gesamte Breite des Bands ausgebildet werden.

10. Packung, die einen oder mehrere Gegenstände umfaßt, welche von einem Band (1) nach Anspruch 4, 5 oder 6 oder von einem Band (1) mit einer durch das Verfahren nach einem der Ansprüche 1 bis 3, 5, 6 und 9 oder durch die Vorrichtung nach Anspruch 7, 8 oder 9 vorgesehenen Verschweißung umfangen sind.

## Revendications

1. Procédé de réunion par soudure de tronçons de bande d'emballage (1), ledit procédé comportant les étapes consistant à :
superposer un premier et un second tronçon de bande (11, 12 ; 34, 35 ; 44, 45) à souder ensemble ;
faire fondre à l'aide de chaleur une pluralité de parties séparées opposées (11, 12 ; 33, 34) des deux tronçons superposés (13 ; 35), les parties fondues des deux tronçons étant séparées dans le sens de la longueur de la bande par des parties non-fondues ; et
appuyer ensemble des parties fondues opposées pour les souder ensemble, une zone non-soudée (43) séparant des soudures adjacentes (41, 42) dans le sens de la longueur de la bande (1) ; caractérisé en ce que
la bande d'emballage est constituée de résine thermoplastique ;
les soudures (41, 42) sont agencées à travers la largeur de ladite bande ; et
la longueur de la zone non-soudée ou de chaque zone non-soudée (43) est plus grande ou égale à l'épaisseur de la bande (1) et inférieure ou égale au double de la largeur de la bande (1).

2. Procédé selon la revendication 1, dans lequel ladite étape de chauffage comporte les étapes consistant à interposer une plaque chauffante (6, 7) entre les surfaces opposées des tronçons en superposition (13 ; 35) pour faire fondre des parties de celles-ci, ensuite enlever la plaque chauffante (6, 7), ladite plaque chauffante étant munie d'une pluralité de parties chauffantes (6, 7) pour former ladite pluralité de parties fondues sur les deux surfaces opposées.

3. Procédé selon la revendication 1, dans lequel lesdites étapes de chauffage et d'appui comportent les étapes consistant à appuyer une plaque vibrante (26, 27) contre un des tronçons en superposition (13 ; 35) pour amener les surfaces de contact opposées des premier et second tronçons en contact étroit et pour créer une chaleur par friction entre les surfaces de contact pour faire fondre des parties de celles-ci, ensuite stopper la vibration pour souder les surfaces, ladite plaque vibrante étant munie d'une pluralité de parties vibrantes (26, 27) pour former ladite pluralité de parties fondues sur les deux surfaces en contact.

4. Bande d'emballage soudée (1) comportant des tronçons en superposition de la bande (13 ; 35) soudés ensemble par une pluralité de soudures (41, 42), des soudures adjacentes étant séparées, dans le sens de la longueur de la bande, par une zone non-soudée (43) ; caractérisée en ce que
la bande d'emballage est constituée d'une résine thermoplastique ;
lesdites soudures (41, 42) sont agencées à travers la largeur de ladite bande (1) ; et
la longueur de la zone non-soudée ou de chaque zone non-soudée (43) est plus grande ou égale à l'épaisseur de la bande (1) et inférieure ou égale au double de la largeur de la bande (1).

5. Procédé ou bande selon l'une quelconque des revendications précédentes, dans lequel ladite bande (1) est constituée d'une résine thermoplastique étirée et a une section transversale plate de sorte que les surfaces opposées (13 ; 35) sont des surfaces larges.

6. Procédé ou bande selon l'une quelconque des revendications précédentes, dans lequel la longueur de la zone non-soudée ou de chaque zone non-soudée (43) est inférieure ou égale à la largeur de la bande (1).

7. Dispositif pour souder des tronçons de bande ensemble (1), ledit dispositif comportant :
des moyens de superposition (4, 5 ; 24, 25) destinés à superposer un premier et un second tronçon de bande (11, 12 ; 34, 35 ; 44, 45) destinés à être soudés ensemble ;
des moyens de chauffage (6, 7 ; 26, 27) destinés à amener une pluralité de parties séparées opposées (11, 12 ; 33, 34) des deux tronçons superposés à fondre et former des parties fondues séparées par des parties non-fondues dans le sens de la longueur de la bande (1) ; et
des moyens d'appui (8, 9 ; 26, 27) destinés à appuyer ensemble les parties fondues superposées opposées pour les souder ensemble, des soudures adjacentes (41, 42) étant séparées dans le sens de la longueur de la bande (1) par une zone non-soudée (43) ; caractérisé en ce que le dispositif est agencé :
pour souder ensemble des tronçons de bande de résine thermoplastique ;
pour agencer lesdites parties soudées (41, 42) à travers la largeur de ladite bande (1) ; et
pour donner à la zone non-soudée ou chaque zone non-soudée (43) une longueur plus grande ou égale à l'épaisseur de la bande (1) et inférieure ou égale au double de la largeur de bande (1).

8. Dispositif selon la revendication 7, dans lequel lesdits moyens de chauffage (6, 7 ; 26, 27) comportent deux ou plus de deux éléments provoquant une chaleur, espacés pour former simultanément lesdites parties fondues.

9. Procédé selon l'une quelconque des revendications 1 à 3, 5 et 6, bande selon l'une quelconque des revendications 4 à 6 ou dispositif selon l'une des revendications 7 ou 8, dans lequel les soudures sont formées sur toute la largeur de la bande.

10. Emballage comportant un ou plusieurs articles entourés par une bande (1) selon la revendication 4, 5 ou 6, ou par une bande (1) ayant une soudure réalisée par le procédé selon l'une quelconque des revendications 1 à 3, 5, 6 et 9 ou par le dispositif selon la revendication 7, 8 ou 9.
